# EUROPÄISCHE PATENTSCHRIFT

(11) **EP 3 612 357 B1**
(45) Veröffentlichungstag und Bekanntmachung des Hinweises auf die Patenterteilung: **13.12.2023**
(21) Anmeldenummer: 18719110.1
(22) Anmeldetag: 17.04.2018
(51) Int. Cl.: B25J 15/00, B25J 19/02, B25J 9/16

(54) **LINEAR-, GREIF-, SPANN-, DREH- ODER SCHWENKVORRICHTUNG, VERFAHREN ZUM BETREIBEN EINER DERARTIGEN VORRICHTUNG, UND EINRICHTUNG ZUR AUSWERTUNG EINER DERARTIGEN VORRICHTUNG**
LINEAR, GRIPPING, CLAMPING, ROTARY OR SWIVELLING DEVICE, METHOD FOR OPERATING A DEVICE OF THIS TYPE, AND UNIT FOR EVALUATING A DEVICE OF THIS TYPE
DISPOSITIF LINÉAIRE, DE PRÉHENSION, DE SERRAGE, DE ROTATION OU DE PIVOTEMENT, PROCÉDÉ SERVANT À FAIRE FONCTIONNER UN DISPOSITIF DE CE TYPE, ET SYSTÈME SERVANT À ÉVALUER UN DISPOSITIF DE CE TYPE

(30) Priorität: 19.04.2017 DE 102017108325
(43) Veröffentlichungstag der Anmeldung: 26.02.2020
(73) Patentinhaber: Schunk GmbH & Co. KG Spann- und Greiftechnik, 74348 Lauffen am Neckar (DE)
(72) Erfinder: FLAXMEYER, Florian, 74074 Heilbronn (DE); FELLHAUER, Bruno, 74336 Brackenheim (DE)
(74) Vertreter: DREISS Patentanwälte PartG mbB
(86) Internationale Anmeldenummer: PCT/EP2018/059741
(87) Internationale Veröffentlichungsnummer: WO 2018/192907

(56) Entgegenhaltungen:
- CN-A- 101 273 688
- US-A1- 2016 107 316
- HIRZINGER G ET AL: "SENSOR-BASED SPACE-ROBOTICS-ROTEX AND ITS TELEROBOTIC FEATURES", IEEE TRANSACTIONS ON ROBOTICS AND AUTOMATION, IEEE INC, NEW YORK, US, Bd. 9, Nr. 5, 1. Oktober 1993 (1993-10-01) , Seiten 649-663, XP000422845, ISSN: 1042-296X, DOI: 10.1109/70.258056

## Beschreibung

Die Erfindung betrifft eine Linear-, Greif-, Spann-, Dreh- oder Schwenkvorrichtung und ein Verfahren zum Betreiben einer derartigen Vorrichtung.

Die Linear-, Greif-, Spann-, Dreh- oder Schwenkvorrichtung umfasst ein Grundgehäuse. Insbesondere bei einer Linear-, Greif- oder Spannvorrichtung ist wenigstens eine im Grundgehäuse verfahrbare Grundbacke vorgesehen. Vorzugsweise sind, wie in der DE 100 13 022 A1 beschrieben, zwei Grundbacken vorgesehen, die über ein Keilhakengetriebe aufeinander zu und voneinander weg bewegbar sind. Das Keilhakengetriebe ist über einen Kolben verstellbar. Mit Greifvorrichtungen werden in der Regel Gegenstände gegriffen. Mit Spannvorrichtungen werden in der Regel Gegenstände festgesetzt, um diese dann zu bearbeiten. Auch wenn im nachfolgenden nur vom Greifen oder Spannen die Rede ist, ist damit stets auch das Spannen und Greifen gemeint.

Die Dreh- oder Schwenkvorrichtung umfasst ebenfalls ein Grundgehäuse und wenigstens einen bezüglich des Grundgehäuses drehbaren Drehteller. Mit der Dreh- oder Schwenkvorrichtung, wie sie beispielsweise aus der DE 10 2009 017 055 A1 bekannt ist, wird beispielsweise eine am Drehteller angeordnete Greif- oder Spannvorrichtung gedreht oder gewendet. Auch wenn im nachfolgenden nur vom Drehen oder Schwenken die Rede ist, ist damit stets auch das Schwenken und Drehen gemeint.

Das bedeutet, es ist ein bezüglich des Grundgehäuses bewegliches Stellglied, beispielsweise die Grundbacke oder der Drehteller, vorgesehen.

Im Grundgehäuse ist bei der Greif- oder Spannvorrichtung ein pneumatischer Antrieb zur Bewegung der wenigstens einen Grundbacke angeordnet. An der wenigstens einen Grundbacke ist beispielsweise wenigstens ein Greif- oder Spannelement angeordnet. Im Grundgehäuse ist wenigsten ein Sensor zur Bestimmung einer momentanen Position der wenigstens einen Grundbacke oder des Greif- oder Spannelements angeordnet. Als Sensor zur Positionserkennung wird beispielsweise ein induktiver Näherungssensor, ein Reedschalter, ein Magnetschalter, ein flexibler Positionssensor, ein analoger Positionssensor, oder ein optischer Abstandssensor am Grundgehäuse angeordnet. Diese bestimmen beispielsweise die Position mindestens einer der Grundbacken direkt oder indirekt. Bei direkter Positionserfassung schaltet die mindestens eine Grundbacke beispielsweise bei Erreichen einer Endposition ihres Verfahrweges einen der Schalter. Bei indirekter Positionsmessung wird beispielsweise eine Position eines mit der mindestens einen Grundbacke bewegungsgekoppelten Teils eines pneumatischen Antriebs bestimmt und daraus die Position der mindestens einen Grundbacke abgeleitet. Beispielsweise wird der Hub eines Kolbens zum Verfahren der mindestens einen Grundbacken bestimmt. Dazu wird beispielsweise ein am Grundgehäuse befestigter Magnetschalter in einem Totpunkt des Kolbens von einem Magneten ausgelöst, der am Kolben befestigt ist.

Die Linear-, Dreh- oder Schwenkvorrichtung kann vergleichbare Sensoren umfassen.

Aus HIRZINGER G ET AL in IEEE TRANSACTIONS ON ROBOTICS AND AUTOMATION, 19931001 IEEE INC, NEW YORK, US, Vol:9, Nr:5, Pages:649 - 663 (XP000422845) ist eine Greifvorrichtung mit Merkmalen des Oberbegriffs des Schutzanspruchs 1 bekannt. Weitere Vorrichtungen mit Merkmalen des Oberbegriffs des Schutzanspruchs 1 sind aus der CN 101 273 688 (A) und der US 2016 107 316 (A1) bekannt.

Die Sensoren müssen je nach erforderlicher Funktion am Grundgehäuse präzise angeordnet, justiert und eingelernt werden. Für einen verbesserten Betrieb der Greif- oder Spannvorrichtung ist es wünschenswert, die Position der wenigstens einen Grundbacke, einen von der wenigstens einen Grundbacke auf ein Werkstück übertragenen momentanen Druck, einen vom pneumatischen Antrieb erzeugten, auf die wenigstens eine Grundbacke oder die Greif- oder Spannvorrichtung wirkenden Impuls, einen momentanen Greiftakt oder eine momentane Greifkraft, je nach gewünschter Funktion, ohne großen Umrüst-, Justier- oder Einlernaufwand, möglichst präzise erfassbar zu machen.

Dies wird durch eine Linear-, Greif-, Spann-, Dreh- oder Schwenkvorrichtung nach Anspruch 1 mit einem Mikroprozessor und einem Grundgehäuse ermöglicht, wobei am Grundgehäuse (104) ein Linear-, Greif-, Spann-, Dreh- oder Schwenkelement lösbar anordenbar ist, und wobei am Grundgehäuse wenigstens zwei Sensoren angeordnet sind, wobei der Mikroprozessor ausgebildet ist Ausgabesignale der wenigstens zwei Sensoren zu einem fusionierten Signal zu fusionieren und Information über eine Identifikation der Linear-, Greif-, Spann-, Dreh- oder Schwenkvorrichtung oder des Linear-, Greif-, Spann-, Dreh- oder Schwenkelements abhängig von dem fusionierten Signal zu ermitteln.

Vorzugsweise ist der Mikroprozessor ausgebildet, einen Betriebszustand der Linear-, Greif-, Spann-, Dreh- oder Schwenkvorrichtung abhängig von dem fusionierten Signal zu bestimmen.

Ein Betriebszustand betrifft beispielsweise eine oder mehrere der folgenden Funktionen:
eine Erfassung einer momentanen Lage des Greif- oder Spannelements im Raum,
eine Erfassung einer momentanen Position eines durch das Greifelement gebildeten Greifers: Auf, Zu, Greifen,
ein Erkennen eines neuen Greif- oder Spannelements,
ein Selbsteinlernen,
ein Erfassen eines momentanen Verfahrbereichs für die wenigstens eine Grundbacke,
eine Kraftschätzung,
eine Kollisionserkennung,
eine Restlebensdauerschätzung,
eine Taktzeitoptimierung,
eine Endlageerkennung,
eine Kombinierte Abfrage zur Erkennung oder Unterscheidung von Magnetfeldern benachbarter Greif- oder Spannelemente, eine Erkennung einer momentanen Kraft zur Vermeidung von Beschädigung,
eine Erfassung von Sensorsignalen für eine Big Data Anwendung,
eine Fusion von Sensorsignalen zur Ausnutzung von Redundanz für eine verbesserte Robustheit oder Selbstdiagnose ,
eine Übertragung von Sensorsignalen als Smart Device.

Vorzugsweise ist der Mikroprozessor ausgebildet, eine Verfahrposition eines Stellglieds, insbesondere wenigstens einer, am Grundgehäuse verfahrbar angeordneter Grundbacke oder eine Drehposition wenigstens eines, am Grundgehäuse verdrehbar angeordneten Drehtellers, abhängig von dem fusionierten Signal zu bestimmen. Dadurch wird der Betriebszustand beispielsweise Auf, Zu, Greifen oder Spannen erkannt.

Vorzugsweise sind am Grundgehäuse ein Magnetfeldsensor, ein Beschleunigungssensor und/oder ein Gyrosensor angeordnet, wobei der Mikroprozessor ausgebildet ist, den Magnetfeldsensor, den Beschleunigungssensor oder den Gyrosensor abhängig von dem fusionierten Signal zu justieren. Die Vorrichtung ist damit bezüglich dieser Sensoren selbsteinlernend und dadurch Plug and Work fähig.

Vorzugsweise ist am Grundgehäuse ein Linear-, Greif-, Spann-, Dreh- oder Schwenkelement lösbar anordenbar, wobei der Mikroprozessor ausgebildet ist, Information über eine Identifikation der Linear-, Greif-, Spann-, Dreh- oder Schwenkvorrichtung oder des Linear-, Greif-, Spann-, Dreh- oder Schwenkelements abhängig von dem fusionierten Signal zu ermitteln. Beispielsweise wird ein Beschleunigungssignal, insbesondere ein Impuls, ausgewertet, den der Beschleunigungssensor erfasst, wenn die mindestens eine Grundbacke an einen Anschlag verfahren wird der einen Verfahrweg der mindestens einen Grundbacke begrenzt. Der Anschlag ist beispielsweise am Grundgehäuse angeordnet. Es kann auch ein Impuls ausgewertet werden, der beim Aufeinandertreffen zweier aufeinander zubewegter Grundbacken entsteht. Es kann auch ein Impuls ausgewertet werden, der beim Aufeinandertreffen mindestens einer Grundbacke und eines Werkstücks entsteht. Der Impuls unterschiedlicher Greif- oder Spannvorrichtungen unterscheidet sich, je nach Greif- oder Spannvorrichtung bzw. je nach Greif- oder Spannelement. Der Impuls ist zur Identifikation verwendbar. Eine Manipulation an der Greif- oder Spannvorrichtung, oder ein systemfremdes Greif- oder Spannelement in der Greif- oder Spannvorrichtung kann zuverlässig erkannt werden.

Es kann auch ein Signal eines Endeffektors ausgewertet werden, der erfasst wenn mindestens eine Grundbacke an den Anschlag verfahren wird. Auch bei einem Drehteller kann ein Endeffektor das Verfahren des Drehtellers an einen Anschlag feststellen.

Vorzugsweise ist der Mikroprozessor ausgebildet, das Linear-, Greif-, Spann-, Dreh- oder Schwenkelement abhängig von der Information über die Identifikation zu justieren. Dies ermöglicht beispielsweise ein Selbstjustieren abhängig von einem Typ des Greif- oder Spannelements.

Vorteilhafterweise ist am Grundgehäuse ein bezüglich des Grundgehäuses verfahrbarer Magnet angeordnet, wobei eine momentane Position des Magnets bezüglich des Grundgehäuses vom Betriebszustand der Greif- oder Spannvorrichtung abhängt, und wobei der Mikroprozessor ausgebildet ist, Information über den Betriebszustand abhängig von einer erfassten momentanen Position des Magneten bezüglich des Grundgehäuses zu bestimmen. Der Magnet ist beispielsweise mit der wenigsten einen Grundbacke oder mit einem die wenigstens eine Grundbacke antreibenden Kolben bewegungsgekoppelt. Der Magnetfeldsensor ist beispielsweise an einem Totpunkt der Kolbenbewegung oder einem Ende des Verfahrweges der wenigstens einen Grundbacke angeordnet. Ein Betriebszustand in dem das Greif- oder Spannelement geöffnet oder geschlossen ist, wird beispielsweise dann erkannt, wenn der Magnetfeldsensor das Magnetfeld des Magneten detektiert bzw. nicht detektiert. Ein erster Betriebszustand wird beispielsweise erkannt, wenn eine ein Magnetfeld mit einer Feldstärke detektiert wird, die einen Schwellwert übersteigt. Ein zweiter Betriebszustand wird beispielsweise erkannt, wenn eine detektierte Magnetfeldstärke gleich dem Schwellwert oder unterhalb des Schwellwerts ist.

Vorteilhafterweise ist der Magnetfeldsensor ausgebildet, Information über eine momentane Magnetfeldstärke zu erfassen, wobei der Mikroprozessor ausgebildet ist die Information über die momentane Lage der Linear-, Greif-, Spann-, Dreh- oder Schwenkvorrichtung abhängig von der erfassten momentanen Magnetfeldstärke zu bestimmen. Dadurch ist eine Lageerkennung anhand beispielsweise einer Veränderung der Richtung des detektierten Magnetfelds möglich. Das Erdmagnetfeld überlagert das vom Magnet erzeugte Magnetfeld. Das Erdmagnetfeld hat je nach Lage des Magnetfeldsensors bezüglich der Magnetpole der Erde eine unterschiedliche Richtung. Der Magnetfeldsensor ist bezüglich der Greif- oder Spannvorrichtung ortsfest. Abhängig von der detektierten Richtung des Erdmagnetfelds ist somit die Lage der Linear-, Greif-, Spann-, Dreh- oder Schwenkvorrichtung bestimmbar.

Vorzugsweise ist im Grundgehäuse eine Sendeeinrichtung und/oder eine Empfangseinrichtung angeordnet, die zur kabelgebundenen oder zur kabellosen Übertragung von Information ausgebildet ist, wobei der Mikroprozessor ausgebildet ist, über die Sendeeinrichtung Information über den Betriebszustand, Information über das fusionierte Signal, oder Information über die Identifikation zu senden, und/oder wobei der Mikroprozessor ausgebildet ist, über die Empfangseinrichtung Information über eine Funktionalität der Linear-, Greif-, Spann-, Dreh- oder Schwenkvorrichtung zu empfangen, und den Betriebszustand abhängig von der Information über die Funktionalität zu konfigurieren. Dazu wird beispielsweise ein externes Gerät über einen IO-Link oder eine aktive Near Field Communication, NFC, Verbindung, oder Bluetooth angebunden.

Die Erfindung betrifft auch eine Verfahren zum Betreiben der insbesondere Greif- oder Spannvorrichtung.

Weitere Einzelheiten und vorteilhafte Ausgestaltungen der Erfindung sind der nachfolgenden Beschreibung zu entnehmen, anhand derer Ausführungsbeispiele der Erfindung näher beschrieben und erläutert sind.

Es zeigen:
- Figur 1: schematisch eine Ansicht einer Linear-, Greif-, Spann-, Dreh- oder Schwenkvorrichtung,
- Figur 2: eine perspektivische Ansicht mit Teilen einer Greif- oder Spannvorrichtung,
- Figur 3: ein Verfahren zur Sensordatenfusion und Auswertung eines Betriebszustands der Linear-, Greif-, Spann-, Dreh- oder Schwenkvorrichtung,
- Figur 4: eine Einrichtung zur Auswertung oder Einstellung eines Betriebszustands Linear-, Greif-, Spann-, Dreh- oder Schwenkvorrichtung.

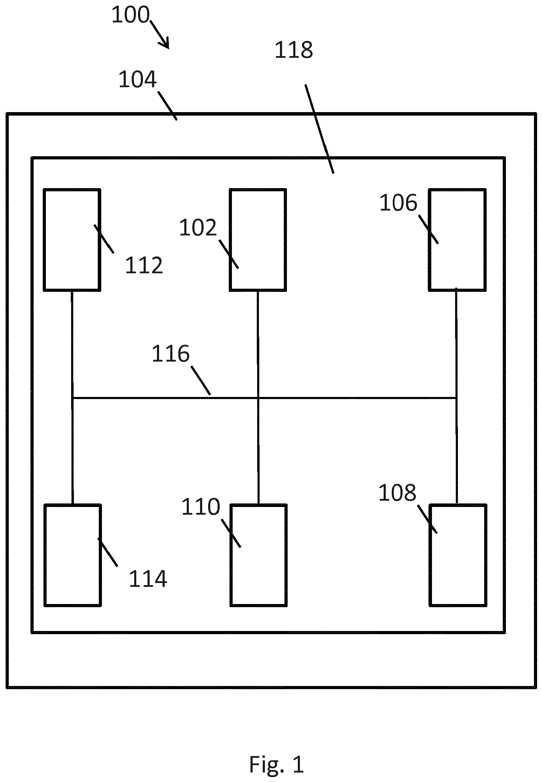

Figur 1 zeigt schematisch eine Greif- oder Spannvorrichtung 100 mit einem Mikroprozessor 102 und einem Grundgehäuse 104, wobei am Grundgehäuse 104 ein Magnetfeldsensor 106, ein Beschleunigungssensor 108 und ein Gyrosensor 110 angeordnet sind. Es können auch andere Sensoren, beispielsweise die im Folgenden noch beschriebenen Sensoren am Grundgehäuse 104 angeordnet sein. Anhand dieses Beispiels wird die Funktion im Folgenden beschrieben. Die Anwendung in einer Linear-, Dreh- oder Schwenkvorrichtung ist ebenfalls möglich.

Am Grundgehäuse 104 sind eine Sendeeinrichtung 112 und eine Empfangseinrichtung 114 angeordnet, die zur kabelgebundenen oder zur kabellosen Übertragung von Information ausgebildet sind. Diese können auch als Transceiver in einem Bauelement realisiert sein. Diese sind ausgebildet beispielsweise einen IO-Link, eine aktive Near Field Communication, NFC, Verbindung, oder eine Bluetooth Verbindung zur Datenübertragung bereitzustellen.

Ein Datenbus 116 verbindet den Mikroprozessor 102 mit dem Magnetfeldsensor 106, dem Beschleunigungssensor 108, dem Gyrosensor 110, der Sendeeinrichtung 112 und der Empfangseinrichtung 114. Diese Elemente sind vorzugsweise auf einer Platine 118 angeordnet.

Der Magnetfeldsensor 106 ist vorzugsweise ein 3D-Magnetfeldsensor. Der Magnetfeldsensor 106 ist ausgebildet, Information über eine momentane Magnetfeldstärke zu erfassen.

Der Beschleunigungssensor 108 ist vorzugsweise ein 3D-Beschleunigungssensor. Der Magnetfeldsensor 106, der Beschleunigungssensor 108 oder der Gyrosensor 110 ist als Mikroelektromechanischer Sensor, d.h. als MEMS Sensor realisiert. Die Bauelemente können auch in einem Mikrochip integriert sein.

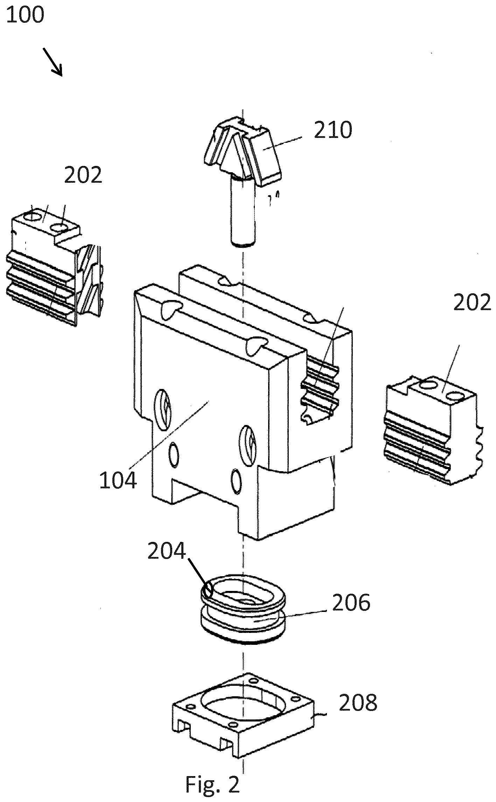

Die Linear-, Greif-, Spann-, Dreh- oder Schwenkvorrichtung 100 sowie ein Verfahren und eine Einrichtung zur Auswertung oder Einstellung eines Betriebszustands der Linear-, Greif- , Spann-, Dreh- oder Schwenkvorrichtung 100 werden im Folgenden mit Bezug auf Figur 1 und 2 am Beispiel der Greif- und Spannvorrichtung 100 beschrieben. Die Elemente mit denselben Funktionen sind in den Figuren mit demselben Bezugszeichen bezeichnet.

Am Grundgehäuse 104 ist wenigsten eine Grundbacke 202 verfahrbar angeordnet.

Am Grundgehäuse 104 ist ein bezüglich des Grundgehäuses 104 verfahrbarer Magnet 204 angeordnet. Im Beispiel ist der Magnet 204 an einem Kolben 206 angeordnet. Anstelle des Magnets 204 kann auch ein weichmagnetischer Kolben verwendet werden. In diesem Fall wird ein Anregungsmagnet stationär am Grundgehäuse 104 so angeordnet, dass ein Magnetfeld das der Anregungsmagnet erzeugt durch den weichmagnetischen Kolben abhängig von der momentanen Position des weichmagnetischen Kolbens verändert wird. Der Magnet 204 kann auch im Grundgehäuse 104 ortsfest bezüglich des Grundgehäuses 104 angeordnet sein. Am Kolben 206 ist in diesem Fall der Magnetfeldsensor 106 verfahrbar bezüglich des Grundgehäuses 104 angeordnet.

Der Kolben 206 ist im Grundgehäuse 104 in einem Zylinder 208 bewegbar angeordnet. Der Kolben 206 wirkt dabei mit einem Keilhakengetriebe 210 zum Verfahren von zwei Grundbacken 202, wie in DE 100 13 022 A1 beschrieben, zusammen. Dadurch ist einer Position des Magneten 204 bezüglich des Grundgehäuses 104 eine eindeutige Position der wenigstens einen Grundbacke 202 in seinem Verfahrweg zuordenbar. Genauer hängt eine momentane Position des Magnets 204 bezüglich des Grundgehäuses 104 vom Betriebszustand der Greif- oder Spannvorrichtung 100 ab.

In der Dreh- oder Schwenkvorrichtung wird anstelle der Grundbacken 202 beispielsweise ein Drehteller mittels eines Stellglieds positioniert, das mittels eines pneumatischen Antriebs verstellbar ist. Der Position des Magneten 204 ist in diesem Fall beispielsweise eine Position des Drehtellers zugeordnet.

Der Mikroprozessor 102 ist ausgebildet, Ausgabesignale von dem Magnetfeldsensor 106, dem Beschleunigungssensor 108 und/oder dem Gyrosensor 110 zu erfassen. Der Mikroprozessor 102 ist ausgebildet, wenigstens zwei Ausganssignale zu einem fusionierten Signal zu fusionieren. Dies wird im Folgenden beschrieben.

Der Mikroprozessor 102 ist ausgebildet, einen Betriebszustand der Greif- oder Spannvorrichtung 100 abhängig von dem fusionierten Signal zu bestimmen.

Der Mikroprozessor 102 ist beispielsweise ausgebildet, eine Verfahrposition der wenigstens einen Grundbacke 202 abhängig von dem fusionierten Signal zu bestimmen.

Der Mikroprozessor 102 ist beispielsweise ausgebildet, Information über den Betriebszustand abhängig von einer erfassten momentanen Position des Magneten 204 bezüglich des Grundgehäuses 104 zu bestimmen.

Der Mikroprozessor 102 ist alternativ oder zusätzlich dazu ausgebildet, Information über die momentane Lage der Greif- oder Spannvorrichtung 100 abhängig von der erfassten momentanen Magnetfeldstärke zu bestimmen.

An der wenigsten einen Grundbacke 202 ist ein Greif- oder Spannelement anordenbar. Der Mikroprozessor 102 kann alternativ oder zusätzlich ausgebildet sein, Information über eine Identifikation der Greif- oder Spannvorrichtung oder des Greif- oder Spannelements abhängig vom fusionierten Signal zu ermitteln. Der Mikroprozessor 102 kann alternativ oder zusätzlich ausgebildet sein, das Greif- oder Spannelement abhängig von der Information über die Identifikation zu justieren.

Der Mikroprozessor 102 ist beispielsweise ausgebildet, über die Sendeeinrichtung 112 Information über den Betriebszustand, Information über das fusionierte Signal oder Information über die Identifikation zu senden.

Der Mikroprozessor 102 ist zusätzlich oder alternativ dazu ausgebildet, über die Empfangseinrichtung 114 Information über eine Funktionalität der Greif- oder Spannvorrichtung zu empfangen, und den Betriebszustand abhängig von der Information über die Funktionalität zu konfigurieren.

Der Mikroprozessor 102 ist vorzugsweise ausgebildet, den Magnetfeldsensor 106, den Beschleunigungssensor 108 oder den Gyrosensor 110 abhängig von dem fusionierten Signal zu justieren.

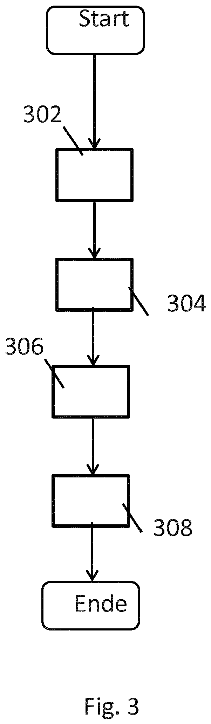

Ein Verfahren zur Auswertung eines Betriebszustands der Linear-, Greif-, Spann-, Dreh- oder Schwenkvorrichtung 100 wird anhand Figur 3 beschrieben. Das Verfahren wird beispielsweise im Betrieb der Linear-, Greif-, Spann-, Dreh- oder Schwenkvorrichtung 100 ausgeführt.

Nach dem Start werden in einem ersten Schritt 302 mindestens zwei Ausgabesignale beispielsweise vom Magnetfeldsensor 106, vom Beschleunigungssensor 108 und/oder vom Gyrosensor 110 fusioniert. Dadurch wird das fusionierte Signal erzeugt. Dieser Schritt enthält beispielsweise das Erfassen der Ausgabesignale oder es wird auf bereits zuvor erfasste Ausgabesignale zugegriffen.

In einem zweiten Schritt 304 wird der Betriebszustand der Linear-, Greif-, Spann-, Dreh- oder Schwenkvorrichtung 100 abhängig vom fusionierten Signal bestimmt.

Beispielsweise wird die Verfahrposition wenigstens einer der Grundbacken 202 abhängig vom fusionierten Signal bestimmt. Alternativ oder zusätzlich dazu wird der Magnetfeldsensor 106, der Beschleunigungssensor 108 oder der Gyrosensor 110 abhängig vom fusionierten Signal justiert. Alternativ oder zusätzlich dazu wird Information über die Identifikation der Greif- oder Spannvorrichtung oder über das Greif- oder Spannelement, das am Grundbacken 100 angeordnet ist, abhängig vom fusionierten Signal ermittelt. Alternativ oder zusätzlich dazu wird das Linear-, Greif-, Spann-, Dreh- oder Schwenkelement abhängig von der Information über die Identifikation justiert. Alternativ oder zusätzlich dazu wird eine momentane Position des Magnets 204 erfasst, wobei Information über den Betriebszustand abhängig von der erfassten momentanen Position des Magneten 204 bezüglich des Grundgehäuses 104 bestimmt wird. Alternativ oder zusätzlich dazu wird Information über die momentane Magnetfeldstärke erfasst, wobei Information über die momentane Lage der Greif- oder Spannvorrichtung 100 abhängig von der erfassten momentanen Magnetfeldstärke bestimmt wird.

In einem alternativen oder zusätzlichen dritten Schritt 306 wird Information über den Betriebszustand, Information über das fusionierte Signal oder Information über die Identifikation kabelgebunden oder kabellos gesendet.

In einem alternativen oder zusätzlichen vierten Schritt 308 wird Information über eine Funktionalität der Greif- oder Spannvorrichtung kabelgebunden oder kabellos empfangen, und der Betriebszustand abhängig von der Information über die Funktionalität konfiguriert.

Anschließend endet das Verfahren.

Diese Schritte können in dieser oder anderer Reihenfolge nacheinander ausgeführt und/oder wiederholt werden.

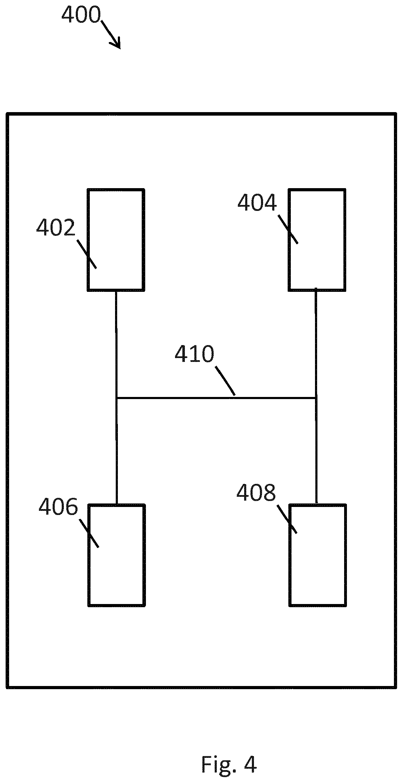

Eine Einrichtung 400 zur Auswertung oder Einstellung eines Betriebszustands der Linear-, Greif-, Spann-, Dreh- oder Schwenkvorrichtung 100 wird anhand der Figur 4 beschrieben. Die Einrichtung 400 ist ausgebildet, Information über einen Betriebszustand, Information über das fusionierte Signal oder Information über die Identifikation der Linear-, Greif-, Spann-, Dreh- oder Schwenkvorrichtung 100 kabelgebunden oder kabellos zu empfangen. Die Einrichtung 400 weist einen Empfänger 402 auf, der kompatibel zur Sendeeinrichtung 112 ausgebildet ist. Genauer ist der Empfänger zur Übertragung der Daten über den IO-Link, NFC oder Bluetooth ausgebildet.

Die Einrichtung 400 ist vorzugsweise ausgebildet, Information über die Funktionalität der Greif- oder Spannvorrichtung 100 kabelgebunden oder kabellos zu senden um den Betriebszustand der Linear-, Greif-, Spann-, Dreh- oder Schwenkvorrichtung 100 abhängig von der Information über die Funktionalität zu konfigurieren. Die Einrichtung 400 weist einen Sender 404 auf, der kompatibel zur Empfangseinrichtung 114 ausgebildet ist. Genauer ist der Sender zur Übertragung der Daten über den IO-Link, NFC oder Bluetooth ausgebildet.

Die Einrichtung 400 weist zudem eine Recheneinheit 406 und eine Mensch-Maschine-Schnittstelle 408 auf, die über einen Bus 410 mit dem Empfänger 406 verbunden und ausgebildet sind, zusammenzuwirken, um die empfangenen Daten bezüglich der Information über einen Betriebszustand, Information über das fusionierte Signal oder Information über die Identifikation der Linear-, Greif-, Spann-, Dreh- oder Schwenkvorrichtung 100 für einen Bediener darzustellen.

Die Recheneinheit 406 und die Mensch-Maschine-Schnittstelle 408 sind über den Bus 410 mit dem Sender 404 verbunden und vorzugsweise ausgebildet sind, zusammenzuwirken, um die Daten bezüglich der einzustellenden Funktionalität der Linear-, Greif-, Spann-, Dreh- oder Schwenkvorrichtung 100 abhängig von einer Benutzereingabe des Bedieners zu erzeugen und über den Sender 404 zu übertragen.

Die Einrichtung 400 ist beispielsweise ein mobiles Gerät, insbesondere ein Smart Phone oder ein Tablet oder Laptop Rechner, die mit der Linear-, Greif-, Spann-, Dreh- oder Schwenkvorrichtung 100 als Smart-Device kommuniziert. Es kann auch eine Datenübermittlung an einen Server oder von einem Server vorgesehen sein, der über Internet verbindbar ist.

Zusammenfassend sind beispielsweise die in der folgenden Tabelle angegebenen Funktionen vorgesehen. Ein "X" in Spalte A bedeutet, dass die Funktion aus der Zeile, in der das "X" eingetragen ist, beispielsweise einen Erdmagnetfeldsensor verwendet. Ein "X" in Spalte B bedeutet, dass die Funktion aus der Zeile, in der das "X" eingetragen ist, beispielsweise einen Sensor für einen eingebauten Magneten 204 verwendet. Ein "X" in Spalte C bedeutet, dass die Funktion aus der Zeile, in der das "X" eingetragen ist, beispielsweise einen Beschleunigungssensor verwendet. Ein "X" in Spalte D bedeutet, dass die Funktion aus der Zeile, in der das "X" eingetragen ist, beispielsweise einen Gyrosensor verwendet. Ein "X" in Spalte E bedeutet, dass die Funktion aus der Zeile, in der das "X" eingetragen ist, beispielsweise Vorwissen über den Endeffektors verwendet. Ein "X" in Spalte F bedeutet, dass die Funktion aus der Zeile, in der das "X" eingetragen ist, beispielsweise den Mikroprozessor verwendet.

| Funktion | A | B | C | D | E | F |
|---|---|---|---|---|---|---|
| Lage im Raum für Fügeaufgaben | X | | X | X | | X |
| Hochauflösende Fingerposition (Analog oder Digital) und zusätzlich die Zuordnung zu 'AUF', 'ZU` und 'Gegriffen' | X | X | | X | X | X |
| Plug and Work (Selbsteinlernende Sensoren) | | X | X | | | X |
| Greiferbereichsausgabe | | X | X | | X | X |
| Kraftschätzung über Impulsauswertung und Vorwissen über die Komponente | | X | X | | X | X |
| Kollisionserkennung | | X | X | | X | X |
| Restlebensdauerschätzung und damit die Möglichkeit für "pay for grip" und "second live" | | X | X | X | X | X |
| Zykluszeitoptimierung da Endlage und deren Qualität schneller erkannt wird | | X | X | | | X |
| Kombinierte Abfrage mehrere Teilbewegungen durch Erkennung und Unterscheidung der Magnetfelder von benachbarten Modulen | X | X | X | X | X | X |
| Erkennung bzw. Möglichkeit zur Vermeidung von Beschädigungen des gegriffenen Bauteils durch Messung der Impulse und Zuordnung zu Überschreitung der vom Werkstück erlaubtem Werte. | | | X | | X | X |
| Grundlage für BIG DATA | X | X | X | X | | |
| Grundlage für Funktionale Sicherheit | X | X | X | X | X | X |
| (FUSI) Funktionalitäten durch redundante Informationsgenerierung | | | | | | |
| Reduktion der Verkabelung, da nur noch eine Leitung den Greifer verlässt, während bisher mindestens 2 Leitungen für obige Funktionen noch mehr Leitungen benötigt werden | | X | X | X | X | X |
| Smart Device Fähigkeit: Das Modul erkennt selbständig eine Änderung der Prozess Daten und kann damit selbständig einen Wartungsauftrag stellen. | | X | X | X | X | X |

Zur Sensorfusion in der Linear-, Greif-, Spann-, Dreh- oder Schwenkvorrichtung 100 werden dabei zwei oder mehr der Sensordaten verwendet. Das bedeutet, an der Linear-, Greif-, Spann-, Dreh- oder Schwenkvorrichtung 100 mit dem Mikroprozessor 102 und dem Grundgehäuse 104 sind am Grundgehäuse 104 wenigstens zwei Sensoren, d.h. beispielsweise
der Magnetfeldsensor 106, der Beschleunigungssensor 108 und/oder der Gyrosensor 110 angeordnet. Der Mikroprozessor 102 ist ausgebildet, Ausgabesignale der wenigstens zwei Sensoren zu einem fusionierten Signal zu fusionieren. Ausgabesingale bezeichnet dabei analoge oder digitale elektrische Signale die Information über einen Messwert, d.h. Ausgabedaten, des jeweiligen Sensors übertragen oder beinhalten. Der Mikroprozessor 102 ist ausgebildet, einen Betriebszustand der Linear-, Greif-, Spann-, Dreh- oder Schwenkvorrichtung 100 abhängig von dem fusionierten Signal zu bestimmen. Außer der Ausgabesignale des Magnetfeldsensors 106, des Beschleunigungssensors 108 und/oder des Gyrosensors 110 können die Ausgabesignale der in der Tabelle angegebenen Sensoren zusätzlich oder alternativ fusioniert werden.

Als Fusion genauer Sensordatenfusion wird dabei die Verknüpfung der Ausgabedaten mehrerer Sensoren bezeichnet. Die für eine bestimmte Funktion fusionierten Sensordaten sind in einer Zeile der Tabelle für die jeweilige Funktion mit "X" gekennzeichnet. Ziel ist die Gewinnung von Informationen, die von der in der Spalte Funktion angeführten Funktion abhängt.

Die Verknüpfung von Ausgabedaten mehrerer Sensoren die denselben Betriebszustand erfasse erhöht die Genauigkeit und reduziert Messfehler wenn die Sensoren nicht korreliert sind.

Zur Verknüpfung könne auch beispielsweise Klassifikationsverfahren, stochastische Verfahren, Kalman-Filter, Fuzzy-Logik, logische Verknüpfungen oder auf Regeln basierende Verfahren verwendet werden.

## Patentansprüche

1. Linear-, Greif-, Spann-, Dreh- oder Schwenkvorrichtung (100) mit einem Mikroprozessor (102) und einem Grundgehäuse (104), wobei am Grundgehäuse (104) ein Linear-, Greif-, Spann-, Dreh- oder Schwenkelement lösbar anordenbar ist, und wobei am Grundgehäuse (104) wenigstens zwei Sensoren (106, 108, 110) angeordnet sind, wobei der Mikroprozessor (102) ausgebildet ist Ausgabesignale der wenigstens zwei Sensoren zu einem fusionierten Signal zu fusionieren , **dadurch gekennzeichnet, dass** der Mikroprozessor ausgebildet ist, Information über eine Identifikation der Linear-, Greif-, Spann-, Dreh- oder Schwenkvorrichtung (100) oder des Linear-, Greif-, Spann-, Dreh- oder Schwenkelements abhängig von dem fusionierten Signal zu ermitteln.

2. Linear-, Greif-, Spann-, Dreh- oder Schwenkvorrichtung (100) nach Anspruch 1, wobei der Mikroprozessor (102) ausgebildet ist einen Betriebszustand der Linear-, Greif-, Spann-, Dreh- oder Schwenkvorrichtung (100) abhängig von dem fusionierten Signal zu bestimmen.

3. Linear-, Greif-, Spann-, Dreh- oder Schwenkvorrichtung (100) nach Anspruch 1 oder 2, **dadurch gekennzeichnet, dass** der Mikroprozessor (102) ausgebildet ist, eine Verfahrposition eines Stellglieds, insbesondere wenigstens einer, am Grundgehäuse (104) verfahrbar angeordneten Grundbacke (202) oder eine Drehposition wenigstens eines, am Grundgehäuse verdrehbar angeordneten Drehtellers, abhängig von dem fusionierten Signal zu bestimmen.

4. Linear-, Greif-, Spann-, Dreh- oder Schwenkvorrichtung (100) nach einem der Ansprüche 1 bis 3, **dadurch gekennzeichnet, dass** am Grundgehäuse (104) als Sensoren ein Magnetfeldsensor (106), ein Beschleunigungssensor (108) und/oder ein Gyrosensor (110) angeordnet sind, wobei der Mikroprozessor (102) ausgebildet ist, den Magnetfeldsensor (106), den Beschleunigungssensor (108) oder den Gyrosensor (110) abhängig von dem fusionierten Signal zu justieren.

5. Linear-, Greif-, Spann-, Dreh- oder Schwenkvorrichtung (100) nach einem der Ansprüche 1 bis 4, **dadurch gekennzeichnet, dass** der Mikroprozessor (102) ausgebildet ist, das Linear-, Greif-, Spann-, Dreh- oder Schwenkelement abhängig von der Information über die Identifikation zu justieren.

6. Linear-, Greif-, Spann-, Dreh- oder Schwenkvorrichtung (100) nach einem der Ansprüche 2 bis 5, **dadurch gekennzeichnet, dass** am Grundgehäuse (104) ein bezüglich des Grundgehäuses (104) verfahrbarer Magnet (204) angeordnet ist, wobei eine momentane Position des Magnets (204) bezüglich des Grundgehäuses (104) vom Betriebszustand der Linear-, Greif-, Spann-, Dreh- oder Schwenkvorrichtung (100) abhängt, und wobei der Mikroprozessor (102) ausgebildet ist, Information über den Betriebszustand abhängig von einer erfassten momentanen Position des Magneten (204) bezüglich des Grundgehäuses (104) zu bestimmen.

7. Linear-, Greif-, Spann-, Dreh- oder Schwenkvorrichtung (100) nach einem der Ansprüche 2 bis 5, **dadurch gekennzeichnet, dass** am Grundgehäuse (104) ein bezüglich des Grundgehäuses (104) verfahrbares weichmagnetisches Element angeordnet ist, wobei eine momentane Position des weichmagnetischen Elements bezüglich des Grundgehäuses (104) vom Betriebszustand der Linear-, Greif-, Spann-, Dreh- oder Schwenkvorrichtung (100) abhängt, und wobei der Mikroprozessor (102) ausgebildet ist, Information über den Betriebszustand abhängig von einer erfassten momentanen Position des weichmagnetischen Elements bezüglich des Grundgehäuses (104) zu bestimmen.

8. Linear-, Greif-, Spann-, Dreh- oder Schwenkvorrichtung (100) nach einem der Ansprüche 1 bis 7, **dadurch gekennzeichnet, dass** der Magnetfeldsensor (106) ausgebildet ist, Information über eine momentane Magnetfeldstärke zu erfassen, wobei der Mikroprozessor (102) ausgebildet ist, Information über die momentane Lage der Linear-, Greif-, Spann-, Dreh- oder Schwenkvorrichtung (100) abhängig von der erfassten momentanen Magnetfeldstärke zu bestimmen.

9. Linear-, Greif-, Spann-, Dreh- oder Schwenkvorrichtung (100) nach einem der Ansprüche 2 bis 8, **dadurch gekennzeichnet, dass** am Grundgehäuse (104) eine Sendeeinrichtung (112) und/oder eine Empfangseinrichtung (114) angeordnet ist, die zur kabelgebundenen oder zur kabellosen Übertragung von Information ausgebildet ist, wobei der Mikroprozessor (102) ausgebildet ist, über die Sendeeinrichtung (112) Information über den Betriebszustand, Information über das fusionierte Signal oder Information über die Identifikation zu senden, und/oder wobei der Mikroprozessor (102) ausgebildet ist, über die Empfangseinrichtung (114) Information über eine Funktionalität der Linear-, Greif-, Spann-, Dreh- oder Schwenkvorrichtung (100) zu empfangen, und den Betriebszustand abhängig von der Information über die Funktionalität zu konfigurieren.

10. Verfahren zum Bertreiben einer Linear-, Greif-, Spann-, Dreh- oder Schwenkvorrichtung (100) nach einem der vorhergehenden Ansprüche, wobei Ausgabesignale der wenigstens zwei Sensoren (106, 108, 110) zu einem fusionierten Signal fusioniert werden und wobei eine Information über eine Identifikation der Linear-, Greif-, Spann-, Dreh- oder Schwenkvorrichtung (100) oder eines Linear-, Greif-, Spann-, Dreh- oder Schwenkelements, das an der Linear-, Greif-, Spann-, Dreh- oder Schwenkvorrichtung (100) angeordnet ist, abhängig vom fusionierten Signal ermittelt wird.

11. Verfahren nach Anspruch 10, **dadurch gekennzeichnet, dass** ein Betriebszustand der Linear-, Greif-, Spann-, Dreh- oder Schwenkvorrichtung (100) abhängig von dem fusionierten Signal bestimmt wird.

12. Verfahren nach Anspruch 10 oder 11, **dadurch gekennzeichnet, dass** eine Verfahrposition eines Stellglieds, insbesondere wenigstens einer, am Grundgehäuse (104) verfahrbar angeordneter Grundbacke (202) oder eine Drehposition wenigstens eines, am Grundgehäuse verdrehbar angeordneten Drehtellers, abhängig vom fusionierten Signal bestimmt wird.

13. Verfahren nach einem der Ansprüche 10 bis 12, **dadurch gekennzeichnet, dass** am Grundgehäuse (104) ein Magnetfeldsensor (106), ein Beschleunigungssensor (108) und/oder ein Gyrosensor (110) angeordnet sind, wobei der Magnetfeldsensor (106), der Beschleunigungssensor (108) oder der Gyrosensor (110) abhängig von dem fusionierten Signal justiert wird.

14. Verfahren nach einem der Ansprüche 10 bis 13, **dadurch gekennzeichnet, dass** das Linear-, Greif-, Spann-, Dreh- oder Schwenkelement abhängig von der Information über die Identifikation justiert wird.

15. Verfahren nach einem der Ansprüche 10 bis 14, **dadurch gekennzeichnet, dass** eine momentane Position eines Magnets (204) erfasst wird, der am Grundgehäuse (104) bezüglich des Grundgehäuses (104) verfahrbar angeordnet ist, und dessen Position bezüglich des Grundgehäuses (104) vom Betriebszustand der Linear-, Greif-, Spann-, Dreh- oder Schwenkvorrichtung (100) abhängt, und wobei Information über den Betriebszustand abhängig von der erfassten momentanen Position des Magneten (204) bezüglich des Grundgehäuses (104) bestimmt wird.

16. Verfahren nach einem der Ansprüche 10 bis 15, **dadurch gekennzeichnet, dass** eine momentane Position eines weichmagnetischen Elements erfasst wird, das am Grundgehäuse (104) bezüglich des Grundgehäuses (104) verfahrbar angeordnet ist, und dessen Position bezüglich des Grundgehäuses (104) vom Betriebszustand der Linear-, Greif-, Spann-, Dreh- oder Schwenkvorrichtung (100) abhängt, und wobei Information über den Betriebszustand abhängig von der erfassten momentanen Position des weichmagnetischen Elements bezüglich des Grundgehäuses (104) bestimmt wird.

17. Verfahren nach einem der Ansprüche 10 bis 16, **dadurch gekennzeichnet, dass** Information über eine momentane Magnetfeldstärke erfasst wird, wobei Information über die momentane Lage der Linear-, Greif-, Spann-, Dreh- oder Schwenkvorrichtung (100) abhängig von der erfassten momentanen Magnetfeldstärke bestimmt wird.

18. Verfahren nach einem der Ansprüche 10 bis 17, **dadurch gekennzeichnet, dass** Information über den Betriebszustand, Information über das fusionierte Signal oder Information über die Identifikation kabelgebunden oder kabellos gesendet wird, und/oder wobei Information über eine Funktionalität der Linear-, Greif-, Spann-, Dreh- oder Schwenkvorrichtung (100) kabelgebunden oder kabellos empfangen wird und der Betriebszustand abhängig von der Information über die Funktionalität konfiguriert wird.

## Claims

1. Linear, gripping, clamping, rotating or pivoting device (100) with a microprocessor (102) and a base housing (104), wherein a linear, gripping, clamping, rotating or pivoting element can be detachably arranged on the base housing (104), and wherein at least two sensors (106, 108, 110) are arranged on the base housing (104), the microprocessor (102) being configured to fuse output signals from the at least two sensors to form a fused signal, **characterized in that** the microprocessor is configured to determine information about an identification of the linear, gripping, clamping, rotating or pivoting device (100) or of the linear, gripping, clamping, rotating or pivoting element depending on the fused signal.

2. Linear, gripping, clamping, rotating or pivoting device (100) according to claim 1, wherein the microprocessor (102) is configured to determine an operating state of the linear, gripping, clamping, rotating or pivoting device (100) depending on the fused signal.

3. Linear, gripping, clamping, rotating or swivelling device (100) according to claim 1 or 2, **characterised in that** the microprocessor (102) is configured to determine a travel position of an actuator, in particular of at least one base jaw (202) arranged displaceably on the base housing (104) or a rotational position of at least one rotary plate arranged rotatably on the base housing, depending on the fused signal.

4. Linear, gripping, clamping, rotating or swivelling device (100) according to one of the claims 1 to 3, **characterised in that** a magnetic field sensor (106), an acceleration sensor (108) and/or a gyro sensor (110) are arranged as sensors on the base housing (104), the microprocessor (102) being configured to adjust the magnetic field sensor (106), the acceleration sensor (108) or the gyro sensor (110) depending on the fused signal.

5. Linear, gripping, clamping, rotating or pivoting device (100) according to any one of claims 1 to 4, **characterized in that** the microprocessor (102) is configured to adjust the linear, gripping, clamping, rotating or pivoting element depending on the information about the identification.

6. Linear, gripping, clamping, rotating or pivoting device (100) according to one of claims 2 to 5, **characterized in that** a magnet (204) which can be moved with respect to the base housing (104) is arranged on the base housing (104), wherein a current position of the magnet (204) with respect to the base housing (104) is dependent on the operating state of the linear, gripping, clamping, rotating or pivoting device (100), and the microprocessor (102) being configured to determine information about the operating state depending on a detected current position of the magnet (204) with respect to the base housing (104).

7. Linear, gripping, clamping, rotating or pivoting device (100) according to one of claims 2 to 5, **characterized in that** a soft magnetic element which can be moved with respect to the base housing (104) is arranged on the base housing (104), a current position of the soft magnetic element with respect to the base housing (104) being dependent on the operating state of the linear, gripping, clamping, rotating or pivoting device (100), and the microprocessor (102) being configured to determine information about the operating state depending on a detected current position of the soft magnetic element with respect to the base housing (104).

8. Linear, gripping, clamping, rotating or pivoting device (100) according to one of claims 1 to 7, **characterized in that** the magnetic field sensor (106) is configured to detect information about a present magnetic field strength, the microprocessor (102) being configured to determine information about the current position of the linear, gripping, clamping, rotating or pivoting device (100) depending on the detected present magnetic field strength.

9. Linear, gripping, clamping, rotating or swivelling device (100) according to one of claims 2 to 8, **characterised in that** a transmitting device (112) and/or a receiving device (114) is arranged on the base housing (104), wherein the transmitting device (112) and/or the receiving device (114) is configured for the wired or wireless transmission of information, wherein the microprocessor (102) is configured to transmit, via the transmitting device (112), information about the operating state, information about the fused signal, information about the identification and/or wherein the microprocessor (102) being configured to receive, via the receiving device (114), information about a functionality of the linear, gripping, clamping, rotating or pivoting device (100), and to configure the operating state depending on the information about the functionality.

10. Method for operating a linear, gripping, clamping, rotating or pivoting device (100) according to one of the preceding claims, wherein output signals of the at least two sensors (106, 108, 110) are fused to a fused signal and wherein information about an identification of the linear, gripping, clamping, rotating or pivoting device (100) or a linear gripping, clamping, rotating or pivoting element which is arranged on the linear, gripping, clamping, rotating or pivoting device (100) is determined depending on the fused signal.

11. A method according to claim 10, **characterized in that** an operating state of the linear, gripping, clamping, rotating or pivoting device (100) is determined depending on the fused signal.

12. Method according to claim 10 or 11, **characterised in that** a travel position of an actuator, in particular of at least one base jaw (202) arranged movable on the base housing (104) or a rotary position of at least one rotary plate arranged rotatably on the base housing, is determined depending on the fused signal.

13. Method according to one of claims 10 to 12, **characterized in that** a magnetic field sensor (106), an acceleration sensor (108) and/or a gyro sensor (110) are arranged on the base housing (104), the magnetic field sensor (106), the acceleration sensor (108) or the gyro sensor (110) being adjusted depending on the fused signal.

14. A method according to any one of claims 10 to 13, **characterized in that** the linear, gripping, clamping, rotating or pivoting element is adjusted depending on the information about the identification.

15. Method according to one of claims 10 to 14, **characterized in that** a current position of a magnet (204) is detected, which is arranged on the base housing (104) such that it can be moved with respect to the base housing (104), and whose position with respect to the base housing (104) depends on the operating state of the linear, gripping, clamping, rotating or pivoting device (100), and information about the operating state being determined depending on the detected current position of the magnet (204) with respect to the base housing (104).

16. Method according to one of claims 10 to 15, **characterized in that** a current position of a soft magnetic element is detected, which is arranged on the base housing (104) such that it can be moved with respect to the base housing (104), and whose position with respect to the base housing (104) depends on the operating state of the linear, gripping, clamping, rotating or pivoting device (100), and information about the operating state being determined depending on the detected current position of the soft magnetic element with respect to the base housing (104).

17. Method according to any one of claims 10 to 16, **characterized in that** information about a present magnetic field strength is detected, wherein information about the current position of the linear, gripping, clamping, rotating or pivoting device (100) is determined depending on the detected present magnetic field strength.

18. Method according to any one of claims 10 to 17, **characterized in that** information about the operating state, information about the fused signal or information about the identification is transmitted wired or wirelessly, and/or wherein information about a functionality of the linear, gripping, clamping, rotating or pivoting device (100) is received wired or wirelessly and the operating state is configured depending on the information about the functionality.

## Revendications

1. Dispositif linéaire, de préhension, de serrage, de rotation ou de pivotement (100) avec un microprocesseur (102) et un boîtier de base (104), dans lequel un élément linéaire, de préhension, de serrage, de rotation ou de pivotement peut être disposé de manière détachable sur le boîtier de base (104), et dans lequel au moins deux capteurs (106, 108, 110) sont disposés sur le boîtier de base (104), dans lequel le microprocesseur (102) est réalisé pour fusionner les signaux de sortie des au moins deux capteurs en un signal fusionné, **caractérisé en ce que** le microprocesseur est réalisé pour déterminer une information sur une identification du dispositif linéaire, de préhension, de serrage, de rotation ou de pivotement (100) ou de l'élément linéaire, de préhension, de serrage, de rotation ou de pivotement en fonction du signal fusionné.

2. Dispositif linéaire, de préhension, de serrage, de rotation ou de pivotement (100) selon la revendication 1, dans lequel le microprocesseur (102) est réalisé pour définir un état de fonctionnement du dispositif linéaire, de préhension, de serrage, de rotation ou de pivotement (100) en fonction du signal fusionné.

3. Dispositif linéaire, de préhension, de serrage, de rotation ou de pivotement (100) selon la revendication 1 ou 2, **caractérisé en ce que** le microprocesseur (102) est réalisé pour déterminer une position de déplacement d'un actionneur, en particulier d'au moins une mâchoire de base (202) disposée de manière déplaçable sur le boîtier de base (104) ou une position de rotation d'au moins un plateau tournant disposé de manière rotative sur le boîtier de base, en fonction du signal fusionné.

4. Dispositif linéaire, de préhension, de serrage, de rotation ou de pivotement (100) selon l'une quelconque des revendications 1 à 3, **caractérisé en ce qu'**un capteur de champ magnétique (106), un capteur d'accélération (108) et/ou un capteur gyroscopique (110) sont disposés sur le boîtier de base (104) en tant que capteurs, dans lequel le microprocesseur (102) est réalisé pour aligner le capteur de champ magnétique (106), le capteur d'accélération (108) ou le capteur gyroscopique (110) en fonction du signal fusionné.

5. Dispositif linéaire, de préhension, de serrage, de rotation ou de pivotement (100) selon l'une quelconque des revendications 1 à 4, **caractérisé en ce que** le microprocesseur (102) est réalisé pour aligner l'élément linéaire, de préhension, de serrage, de rotation ou de pivotement en fonction de l'information sur l'identification.

6. Dispositif linéaire, de préhension, de serrage, de rotation ou de pivotement (100) selon l'une quelconque des revendications 2 à 5, **caractérisé en ce qu'**un aimant (204) déplaçable par rapport au boîtier de base (104) est disposé sur le boîtier de base (104), dans lequel une position momentanée de l'aimant (204) par rapport au boîtier de base (104) dépend de l'état de fonctionnement du dispositif linéaire, de préhension, de serrage, de rotation ou de pivotement (100), et dans lequel le microprocesseur (102) est réalisé pour définir une information sur l'état de fonctionnement en fonction d'une position momentanée acquise de l'aimant (204) par rapport au boîtier de base (104).

7. Dispositif linéaire, de préhension, de serrage, de rotation ou de pivotement (100) selon l'une quelconque des revendications 2 à 5, **caractérisé en ce qu'**un élément magnétique doux déplaçable par rapport au boîtier de base (104) est disposé sur le boîtier de base (104), dans lequel une position momentanée de l'élément magnétique doux par rapport au boîtier de base (104) dépend de l'état de fonctionnement du dispositif linéaire, de préhension, de serrage, de rotation ou de pivotement (100), et dans lequel le microprocesseur (102) est réalisé pour définir une information sur l'état de fonctionnement en fonction d'une position momentanée acquise de l'élément magnétique doux par rapport au boîtier de base (104).

8. Dispositif linéaire, de préhension, de serrage, de rotation ou de pivotement (100) selon l'une quelconque des revendications 1 à 7, **caractérisé en ce que** le capteur de champ magnétique (106) est réalisé pour acquérir une information sur une intensité du champ magnétique momentanée, dans lequel le microprocesseur (102) est réalisé pour définir une information sur la situation momentanée du dispositif linéaire, de préhension, de serrage, de rotation ou de pivotement (100) en fonction de l'intensité du champ magnétique momentanée acquise.

9. Dispositif linéaire, de préhension, de serrage, de rotation ou de pivotement (100) selon l'une quelconque des revendications 2 à 8, **caractérisé en ce qu'**un système d'émission (112) et/ou un système de réception (114) est disposé sur le boîtier de base (104), qui est réalisé pour la transmission filaire ou pour la transmission sans fil d'une information, dans lequel le microprocesseur (102) est réalisé pour envoyer par l'intermédiaire du système d'émission (112) une information sur l'état de fonctionnement, pour envoyer une information sur le signal fusionné ou une information sur l'identification, et/ou dans lequel le microprocesseur (102) est réalisé pour recevoir par l'intermédiaire du système de réception (114) une information sur une fonctionnalité du dispositif linéaire, de préhension, de serrage, de rotation ou de pivotement (100), et pour configurer l'état de fonctionnement en fonction de l'information sur la fonctionnalité.

10. Procédé pour faire fonctionner un dispositif linéaire, de préhension, de serrage, de rotation ou de pivotement (100) selon l'une quelconque des revendications précédentes, dans lequel les signaux de sortie des au moins deux capteurs (106, 108, 110) sont fusionnés en un signal fusionné et dans lequel une information sur une identification du dispositif linéaire, de préhension, de serrage, de rotation ou de pivotement (100) ou d'un élément linéaire, de préhension, de serrage, de rotation ou de pivotement, qui est disposé sur le dispositif linéaire, de préhension, de serrage, de rotation ou de pivotement (100), est déterminée en fonction du signal fusionné.

11. Procédé selon la revendication 10, **caractérisé en ce qu'**un état de fonctionnement du dispositif linéaire, de préhension, de serrage, de rotation ou de pivotement (100) est défini en fonction du signal fusionné.

12. Procédé selon la revendication 10 ou 11, **caractérisé en ce qu'**une position de déplacement d'un actionneur, en particulier d'au moins une mâchoire de base (202) disposée de manière déplaçable sur le boîtier de base (104) ou une position de rotation d'au moins un plateau tournant disposé de manière rotative sur le boîtier de base, est définie en fonction du signal fusionné.

13. Procédé selon l'une quelconque des revendications 10 à 12, **caractérisé en ce qu'**un capteur de champ magnétique (106), un capteur d'accélération (108) et/ou un capteur gyroscopique (110) sont disposés sur le boîtier de base (104), dans lequel le capteur de champ magnétique (106), le capteur d'accélération (108) ou le capteur gyroscopique (110) est aligné en fonction du signal fusionné.

14. Procédé selon l'une quelconque des revendications 10 à 13, **caractérisé en ce que** l'élément linéaire, de préhension, de serrage, de rotation ou de pivotement est aligné en fonction de l'information sur l'identification.

15. Procédé selon l'une quelconque des revendications 10 à 14, **caractérisé en ce qu'**une position momentanée d'un aimant (204), qui est disposé sur le boîtier de base (104) de manière déplaçable par rapport au boîtier de base (104), et dont la position par rapport au boîtier de base (104) dépend de l'état de fonctionnement du dispositif linéaire, de préhension, de serrage, de rotation ou de pivotement (100) est acquise, et dans lequel une information sur l'état de fonctionnement est définie en fonction de la position momentanée acquise de l'aimant (204) par rapport au boîtier de base (104).

16. Procédé selon l'une quelconque des revendications 10 à 15, **caractérisé en ce qu'**une position momentanée d'un élément magnétique doux, qui est disposé sur le boîtier de base (104) de manière déplaçable par rapport au boîtier de base (104), et dont la position par rapport au boîtier de base (104) dépend de l'état de fonctionnement du dispositif linéaire, de préhension, de serrage, de rotation ou de pivotement (100) est acquise, et dans lequel l'information sur l'état de fonctionnement est définie en fonction de la position momentanée acquise de l'élément magnétique doux par rapport au boîtier de base (104).

17. Procédé selon l'une quelconque des revendications 10 à 16, **caractérisé en ce qu'**une information sur une intensité du champ magnétique momentanée est acquise, dans lequel une information sur la situation momentanée du dispositif linéaire, de préhension, de serrage, de rotation ou de pivotement (100) est définie en fonction de l'intensité du champ magnétique momentanée acquise.

18. Procédé selon l'une quelconque des revendications 10 à 17, **caractérisé en ce que** l'information sur l'état de fonctionnement, l'information sur le signal fusionné ou l'information sur l'identification est envoyée de manière filaire ou sans fil, et/ou dans lequel l'information sur une fonctionnalité du dispositif linéaire, de préhension, de serrage, de rotation ou de pivotement (100) est reçue de manière filaire ou sans fil et l'état de fonctionnement est configuré en fonction de l'information sur la fonctionnalité.
